# EUROPEAN PATENT SPECIFICATION

(11) **EP 1 145 931 B1**
(45) Date of publication and mention of the grant of the patent: **03.09.2008**
(21) Application number: 01302702.4
(22) Date of filing: 23.03.2001
(51) Int. Cl.: B62B 3/00

(54) **A carriage**
Wagen
Voiture

(30) Priority: 12.04.2000 GB 0008833
(43) Date of publication of application: 17.10.2001
(73) Proprietor: Arjo. Med.Aktiebolag Limited, Gloucester, GL1 2SL (GB)
(72) Inventor: Von Schroeter, Philip, Haresfield, Gloucester GL10 3DU (GB)
(74) Representative: Thaker, Shalini

(56) References cited:
- FR-A- 2 011 023
- FR-A- 2 703 016
- GB-A- 2 274 979
- GB-A- 2 286 368

## Description

This invention relates to a carriage, particularly a steerable carriage such as an invalid hoist or shopping trolley.

FR 2703016, shows a carriage for a shopping trolley mounted on castors, as defined in the preamble of claim 1, each swivellable on first axis, the castor supported by a support element and the support element being displaceable about a second axis to encourage the castor supported thereby to swivel one way or the other according to the direction the support element is displaced, to steer the trolley.

The present invention seeks to make improvements.

According to the present invention, as defined in claim 1, there is provided a carriage mounted on castors, each of which is swivellable about a first axis, at least one of the castors being supported by a support element which is angularly displaceable about a second axis parallel to the intended direction of fore and aft movement of the carriage, said first axis being perpendicular or substantially perpendicular to said second axis, and means being provided for angularly displacing said support element about said second axis to encourage the castor supported thereby to swivel one way or the other according to the direction in which the support element is angularly displaced and to steer the carriage when the latter is propelled along the ground.

Preferred and/or optional features of the invention are set forth in claims 2 to 12.

The invention will now be more particularly described, by way of example, with reference to the accompanying drawings, in which:-
Figure 1 is a perspective view of a carriage according to the present invention, in the form of an invalid hoist,
Figure 2 is an end view of one of the chassis members of the hoist shown in Figure 1, in a first condition,
Figure 3 is a view similar to Figure 2 with the chassis member in a second condition,
Figure 4 is a view similar to Figure 2 with the chassis member in a third condition,
Figure 5 is a view similar to Figure 2 with the chassis member in a fourth condition,
Figure 6 is a fragmentary perspective view showing the chassis member and lower part of the mast with the chassis member in said first or third condition, and
Figure 7 is a view similar to Figure 6 but with the chassis member in said second or fourth condition.

Referring now to the drawings, the carriage shown therein is in the form of an invalid hoist comprising a first telescopically extendible/retractable mast 10 upstanding from a first elongate chassis member 11 and a second telescopically extendible/retractable mast 12 upstanding from a second elongate chassis member 13. Each mast has an upper part 14 and a lower part 15.

A lifting arm 16 is supported by and extends between the upper parts 14 of the first and second masts 10 and 12, respectively. The lifting arm 16 comprises two parts 17 and 18 pivotable relative to one another in a horizontal plane. The part 17 is supported by the upper part 14 of the first mast 10 and the part 18 is supported by the upper part of the second mast 12. The lifting arm 16 is the sole means connecting the first mast 10 and the chassis member 11 to the second mast 12 and the chassis member 13.

Each part 17 and 18 of the lifting arm comprises a parallelogram linkage 19 to maintain the chassis members 11 and 13 in parallel spaced relationship as the two parts 17 and 18 of the arm 16 pivot relative to one another and a carriage 20 which is mounted on the upper part 14 of the mast.

The upper mast parts 14 telescope over the lower mast parts 15. The carriages 20 can be raised or lowered relative to the upper mast parts 14 in addition to being raised and lowered by relative movement of the two mast parts 14, 15 to increase the overall lifting range of the lifting device. A power operated actuator (not shown) is provided in each mast for extending and retracting the two masts; and for raising and lowering the two carriages, in synchronism with one another.

An actuator (not shown) is accommodated in housing 21 for angularly displacing the two parts 17 and 18 of the lifting arm relative to one another.

A sling hanger 22 for supporting a full body sling is suspended from the lifting arm 16 by a sling hanger support 23. The sling hanger 22 is pivotable relative to the sling hanger support 23 about a horizontal axis.

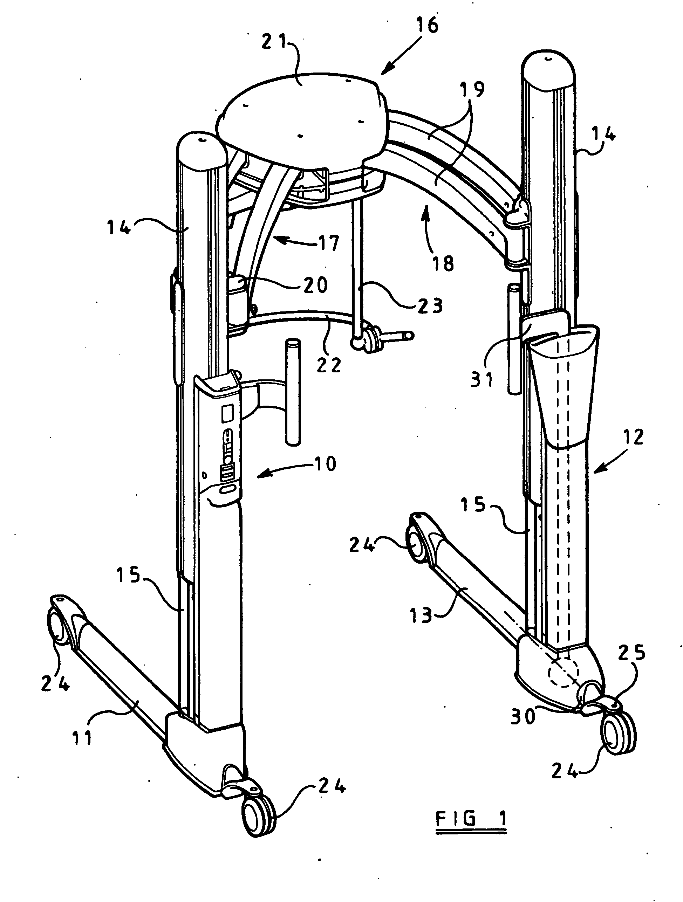

Each chassis has two castors 24 swivellable about an in use vertical axis 25. The castors 24 are shown in Figure 1 in positions which result in the chassis moving in a straight line if propelled manually along the ground in for or aft direction.

The chassis member 13 is supported in a bearing 30 at the base of the lower part 15 of the mast 12 for angular displacement about an in use horizontal axis 26 extending in the direction of the longitudinal extent of the chassis member 13.

The chassis member 13 is angularly displaceable in the bearing 30 by a lever 31. Alternatively, it could be pivotable by a motor and gearbox unit (not shown) housed in the base of the lower part 15 of the mast 12.

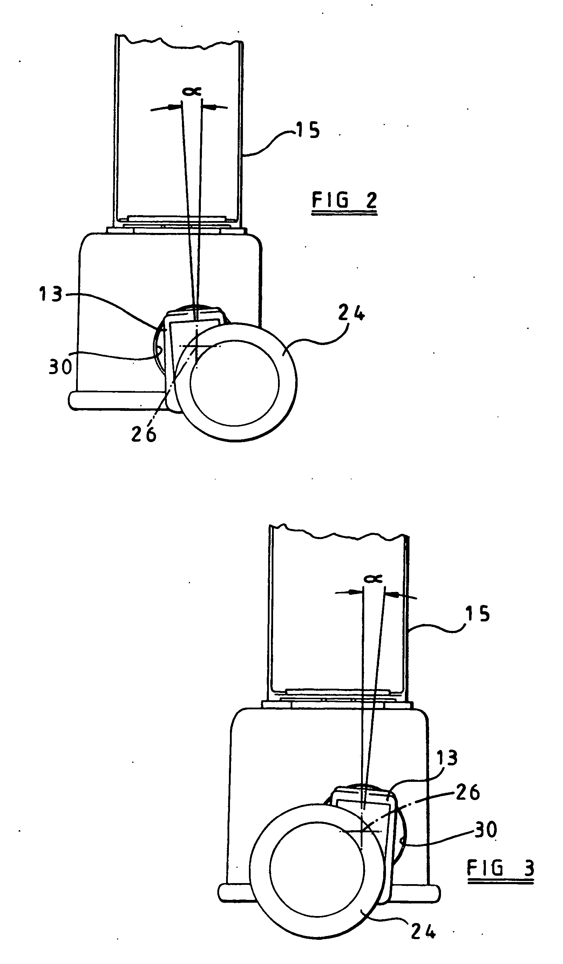

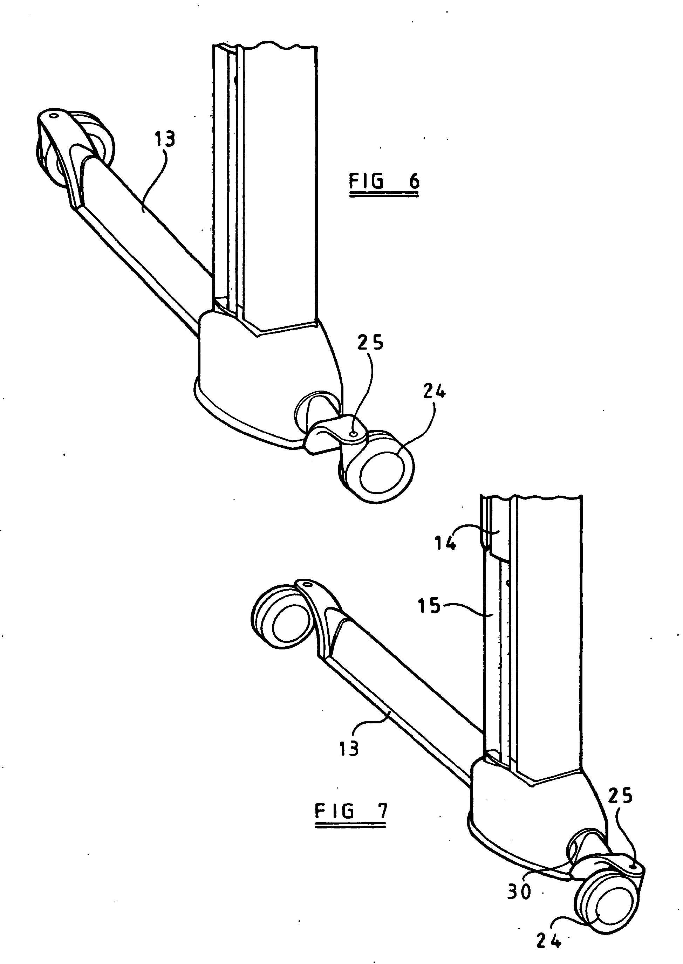

The chassis member 13 is pivoted through an angle ∝, typically in the region of 5 °, in an anti-clockwise direction, as viewed in Figures 2 to 6 to encourage the castors 24 supported by the chassis member 13 to swivel to the position as shown in Figure 2 in order to steer the chassis to the left when the latter is propelled along the ground. The chassis member 13 is angularly displaced through a similar angle « in a clockwise direction, as viewed in Figures 3 and 7, in order to encourage the castors to swivel to the position as shown in Figures 3 and 7 in order to steer the chassis to the right when the latter is propelled along the ground.

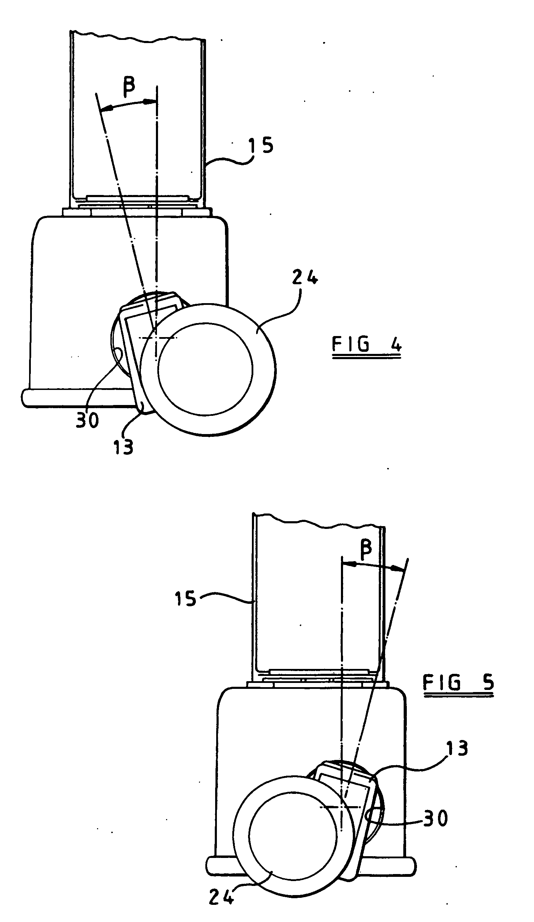

The chassis member 13 can be angularly displaced through a larger angle β, typically in the region of 15°, as shown in Figure 4 and 5 to facilitate the movement of the chassis member 13 towards or away from the chassis member 11 when the two parts of the lifting arm are pivoted relative to one another to reduce or increase the width of the chassis.

Although, as described above, a chassis member and two castors are pivotable about the axis 26, it is conceivable that a single castor and support element therefor are pivotable about an axis parallel to the intended direction of fore and aft movement of the carriage to encourage that castor to steer the carriage when the latter is propelled along the ground.

The carriage as described above has been described in the form of a particular type of lifting hoist. The carriage could be in the form of other types of lifting hoist and in particular in the form of lifting hoists in which the two chassis members are connected together by a fixed or telescopically extendible cross member at the base of the hoist. The carriage could take other forms and, in particular, could be in the form of a shopping trolley.

## Claims

1. A carriage mounted on castors (24) the carriage in the form of a chassis comprising a pair of parallel spaced apart elongate chassis members (11, 13) connected together by at least one cross member (16), each chassis member supporting at least one castor (24), each castor swivellable about a first axis (25), one of the chassis members (13) forming the support element for at least one castor (24) and angularly displaceable about a second axis (26) parallel to the intended direction of fore and aft movement of the carriage, said first axis being perpendicular or substantially perpendicular to the second axis and means (31) being provided for angularly displacing said chassis member (13) through a first angle (α) about said second axis to encourage the castors supported thereby to swivel one way or the other according to the direction in which the chassis member is angularly displaced and to steer the carriage when the latter is propelled along the ground **characterised in that** the chassis member (13) is angularly displaceable through a second larger angle (β) to facilitate movement of one chassis member (13) towards or away from the other chassis member (11).

2. A carriage as claimed in claim 1 wherein the displaceable means comprises a manually operated lever.

3. A carriage as claimed in claim 1 wherein the displaceable means comprises a power driven actuator.

4. A carriage as claimed in claim 1, 2 or 3 wherein said one chassis member (13) is mounted for said angular displacement in a bearing (30) supported directly or indirectly by the said at least cross member (16).

5. A carriage as claimed in any one of the preceding claims in the form of an invalid hoist.

6. A carriage as claimed in claim 5, further comprising a first telescopically extendible/retractable mast (10) upstanding from one of the chassis members (11), a second telescopically extendible/retractable mast (12) upstanding from the other chassis member (13), each mast having an upper part (14) and a lower part (15), the cross member being in the form of a lifting arm (16) supported by and extending between the first and second masts, and power operated means for extending and retracting the first and second masts in synchronism with one another.

7. A carriage as claimed in claim 6, wherein the lifting arm (16) maintains the two chassis members (11, 13) in spaced apart parallel or substantially parallel relationship.

8. A carriage as claimed in claim 6 or 7, wherein the lifting arm (16) is the sole means of connecting the first mast (10) and chassis member (11) to the second mast (12) and chassis member (13.

9. A carriage as claimed in any one of the claims 6 to 8, wherein the lifting arm (16) can be raised or lowered relative to the masts.

10. A carriage as claimed in any one of claims 6 to 9, wherein the lifting arm (16) comprises two parts (17, 18) pivotable relative to one another about a vertical or substantially vertical axis, one part (17) being supported by the first mast and the other part (18) being supported by the second mast.

11. A carriage as claimed in claim 10, wherein each part of the lifting arm (16) comprises a parallelogram linkage (19) to maintain the chassis members in parallel spaced relationship as the two parts of the arm pivot relative to one another.

12. A carriage as claimed in any one of claims 1 to 4, in the form of a shopping trolley.

## Patentansprüche

1. Wagen, der auf Lenkrädern (24) montiert ist, wobei der Wagen die Form eines Fahrgestells hat, mit einem Paar parallel beabstandeter langgestreckter Fahrgestellträger (11, 13), die miteinander durch wenigstens einen Querträger (16) verbunden sind, wobei jeder Fahrgestellteräger wenigstens ein Lenkrad (24) trägt, jedes Lenkrad um eine erste Achse (25) schwenkbar ist, einer der Fahrgestellträger (13) das Halteelement für wenigstens ein Lenkrad (24) bildet und um eine zweite Achse (26) parallel zu der beabsichtigten Richtung der Bewegung in der Wagenlängsrichtung verstellbar ist, wobei die erste Achse rechtwinklig oder im Wesentlichen rechtwinklig zur zweiten Achse liegt und Mittel (31) für die Winkelverstellung des Fahrgestellträgers (13) um einen ersten Winkel (α) um die zweite Achse vorgesehen sind, um die getragenen Lenkräder dabei zu unterstützen, gemäß der Richtung, in welcher der Fahrgestellträger im Winkel verstellt ist, in die eine Richtung oder die andere zu schwenken und den Wagen zu lenken, wenn dieser entlang dem Boden angetrieben wird, **dadurch gekennzeichnet, dass** der Fahrgestellträger (13) um einen zweiten, größeren Winkel (β) winkelverstellbar ist, um die Bewegung auf dem Fahrgestellträger (13) auf den anderen Fahrgestellträger (11) zu oder von diesem weg zu erleichtern.

2. Wagen nach Anspruch 1, wobei die verschiebbaren Mittel einen manuell zu betätigenden Hebel aufweisen.

3. Wagen nach Anspruch 1, wobei die verschiebbaren Mittel ein motorbetriebenes Betätigungselement aufweisen.

4. Wagen nach einem der Anspruche 1, 2 oder 3, wobei der Fahrgestellträger (13) für die Winkelverstellung in einem Lager (30) montiert ist, das direkt oder indirekt wenigstens durch den Querträger (16) gehalten wird.

5. Wagen nach einem der vorstehenden Ansprüche in Form eines Behindertenfahrstuhls.

6. Wagen nach Anspruch 5, weiterhin mit einem ersten teleskopartig ausziehbaren/einziehbaren Pfosten (10), der an einem der Fahrgestellträger (11) nach oben steht, einem zweiten teleskopartig ausziehbaren/einziehbaren Pfosten (12), der am anderen Fahrgestellträger (13) nach oben steht, wobei jeder Pfosten einen oberen Teil (14) und einen unteren Teil (15) hat, der Querträger die Form eines Hebearms (16) hat, der von den ersten und zweiten Pfosten getragen wird und sich zwischen diesen erstreckt, und einer motorgetriebenen Einrichtung zum Ausziehen und Einziehen der ersten und weiten Pfosten synchron miteinander.

7. Wagen nach Anspruch 6, wobei der Hebearm (16) die zwei Fahrgestellträger (11, 13) parallel zueinander beabstandet oder in einer im Wesentlichen parallelen Lage zueinander hält.

8. Wagen nach Anspruch 6 oder 7, wobei der Hebearm (16) das einzige Mittel ist, um den ersten Pfosten (10) und den Fahrgestellträger (11) mit dem zweiten Pfosten (12) und dem Fahrgestellträger (13) zu verbinden.

9. Wagen nach einem der Ansprüche 6 bis 8, wobei der Hebearm (16) relativ zu dem Pfosten angehoben und abgesenkt werden kann.

10. Wagen nach einem der Ansprüche 6 bis 9, wobei der Hebearm (16) zwei Teile (17, 18) aufweist, die relativ zueinander um eine vertikale oder im Wesentlichen vertikale Achse schwenkbar sind, wobei ein Teil (17) durch den ersten Pfosten und der andere Teil (18) durch den zweiten Pfosten gehalten wird.

11. Wagen nach Anspruch 10, wobei jeder Teil des Hebearms (16) ein Parallelogrammgestänge (19) aufweist, um die Fahrgestellträger wie die zwei Teile des Armdrehzapfens parallel zueinander beabstandet relativ zueinender aufrecht zu halten.

12. Wagen nach einem der Ansprüche 1 bis 4 in Form eines Einkaufswagens.

## Revendications

1. Chariot monté sur des roulettes (24), le chariot ayant la forme d'un châssis comprenant une paire d'éléments (11, 13) de châssis allongés, espacés, parallèles, reliés l'un à l'autre par au moins un élément transversal (16), chaque élément de châssis supportant au moins une roulette (24), chaque roulette pouvant tourner autour d'un premier axe (25), l'un des éléments (13) de châssis formant l'élément de support d'au moins une roulette (24) et pouvant se déplacer angulairement autour d'un second axe (26) parallèle à la direction souhaitée de déplacement d'avant en arrière du chariot, ledit premier axe étant perpendiculaire ou sensiblement perpendiculaire au second axe, et un moyen (31) étant prévu pour le déplacement angulaire, sur un premier angle (α), dudit élément (13) de châssis autour dudit second axe pour encourager les roulettes ainsi supportées à tourner dans un sens ou dans l'autre en fonction de la direction dans laquelle l'élément de châssis est déplacé angulairement et pour faire tourner le chariot lorsque ce dernier est propulsé sur le sol, **caractérisé en ce que** l'élément (13) de châssis peut se déplacer angulairement sur un second angle plus grand (β) pour faciliter le rapprochement d'un élément (13) de châssis et de l'autre élément (11) de châssis, ou son éloignement de celui-ci.

2. Chariot selon la revendication 1, dans lequel le moyen pouvant être déplacé comprend un levier actionné manuellement.

3. Chariot selon la revendication 1, dans lequel le moyen pouvant être déplacé comprend un actionneur commandé par moteur.

4. Chariot selon la revendication 1, 2 ou 3, dans lequel ledit un élément (13) de châssis est monté pour ledit déplacement angulaire dans un palier (30) supporté directement ou indirectement par ledit au moins élément transversal (16).

5. Chariot selon l'une quelconque des revendications précédentes, ledit chariot ayant la forme d'un appareil de levage pour invalide.

6. Chariot selon la revendication 5, comprenant en outre un premier mât à possibilité de déploiement / retrait télescopique (10) érigé verticalement à partir de l'un des éléments (11) de châssis, un second mât à possibilité de déploiement / retrait télescopique (12) érigé verticalement à partir de l'autre élément (13) de châssis, chaque mât comportant une partie supérieure (14) et une partie inférieure (15), l'élément transversal ayant la forme d'un bras (16) de levage supporté par les premier et second mâte et s'étendant entre eux, et un moyen commandé par moteur servant au déploiement et au retrait des premier et second mâts de manière synchrone l'un avec l'autre.

7. Chariot selon la revendication 6, dans lequel le bras (16) de levage maintient les deux éléments (11, 13) de châssis dans une relation espacée parallèle ou sensiblement parallèle.

8. Chariot selon la revendication 6 ou 7, dans lequel le bras (16) de levage est l'unique moyen de liaison du premier mât (10) et de l'élément (11) de châssis avec le second mât (12) et l'élément (13) de châssis.

9. Chariot selon l'une quelconque des revendications 6 à 8, dans lequel le bras (16) de levage peut être élevé ou abaissé par rapport aux mâts.

10. Chariot selon l'une quelconque des revendications 6 à 9, dans lequel le bras (16) de levage comprend deux parties (17, 18) pouvant pivoter l'une par rapport à l'autre autour d'un axe vertical ou sensiblement vertical, une première partie (17) étant supportée par le premier mât et l'autre partie (18) étant supportée par le second mât.

11. Chariot selon le revendication 10, dans lequel chaque partie du bras (16) de levage comprend une articulation en parallélogramme (19) servant à maintenir les éléments de châssis dans une relation espacée parallèle lorsque les deux parties du bras pivotent l'une par rapport à l'autre.

12. Chariot selon l'une quelconque des revendications 1 à 4, ledit chariot ayant la forme d'un caddie.
